Europäisches Patentamt

European Patent Office    (11) Publication number: **0 075 431**
Office européen des brevets                                   **A1**

(19)

(12) **EUROPEAN PATENT APPLICATION**

(21) Application number: **82304836.8**    (51) Int. Cl.³: **B 01 D 53/22**

(22) Date of filing: **14.09.82**

(30) Priority: **17.09.81 US 303221**

(71) Applicant: **MONSANTO COMPANY, Patent Department 800 North Lindbergh Boulevard, St. Louis, Missouri 63166 (US)**

(43) Date of publication of application: **30.03.83 Bulletin 83/13**

(72) Inventor: **Morris, Stephen Ross, 28 Smiths Road, Templestowe Victoria 3106 (AU)**
Inventor: **van Gelder, John May, 14626 Pine Orchard Court, Chesterfield Missouri 63017 (US)**

(74) Representative: **McLean, Peter et al, Monsanto Europe S.A. Patent Department Avenue de Tervuren 270-272 Letter Box No 1, B-1150 Brussels (BE)**

(84) Designated Contracting States: **DE GB IT**

(54) **Method of separating one gas from a mixture of gases.**

㊐ The method of separating one gas from a mixture of gases at a constant purity for use at variable rates and a constant purity wherein the gas mixture is passed through a heat exchanger to a plurality of permeators having permeation membranes more permeable to the one gas than other gases of the mixture. The heat exchanger varies the temperature of the gas mixture prior to contact with the membrane to adjust the permeation rate of the one gas to a desired value within a range of recovery rates, the number of permeators in use being varied to select another range of recovery rates when varying the temperature of the gas mixture is insufficient to maintain a constant purity at the desired rate recovery of the separated gas.

# METHOD OF SEPARATING ONE GAS FROM A MIXTURE OF GASES

## BACKGROUND OF THE INVENTION

### A.  Field of the Invention

This invention relates to methods for recovering one gas from a mixture of gases.

### B.  Prior Art

It is known that permeable membranes can be used to separate certain gases from mixtures of those and other gases.  The gas mixture is brought into contact with one side of the membrane and the more permeable gas permeates the membrane and is recovered from the other side thereof. The purity of and rate at which the one gas is recovered depends on a number of factors.  Some of the factors which influence the rate of recovery and purity of the permeated gas are the permeability of the membrane for the one gas as compared to the other gases of the mixture, the difference in partial pressures of the one gas across the membrane, the effective surface area of the membrane and the flow rate of the gas mixture.  Since certain of these factors, such as flow rate and gas mixture pressure, are often variable in nature, the rate of recovery and/or purity of the one gas is subject to variation.  This variation is likely to have an upsetting effect on a subsequent process where the permeated gas stream is utilized and where the characteristics of that gas stream must be maintained within certain limits.  It would be desirable to have a process where one gas is recovered from a mixture of that and at least one other gas under conditions such that the purity of the recovered gas may be adjusted to a desirable constant value at varying mixture supply and/or recovered gas usage rates.

Frequently, the permeated gas is used in another process where a constant purity at a variable rate of usage is required. In known permeation systems the purity of the permeated gas fluctuates with changes in rate of recovery, so that these systems are unsuited for use where purity must remain constant as the rate of recovery is changed. The process of the present invention provides a recovered gas stream having a constant purity at varying rates of recovery and usage.

## SUMMARY OF THE INVENTION

A method for separating one gas from a mixture of gases at a constant purity and a variable recovery rate wherein the gas mixture is passed through a heat exchanger to a plurality of permeators, each of the permeators being provided with a membrane more permeable to the one gas than the other gases of the mixture. In order to maintain a constant purity at a variable rate of recovery and usage of the separated one gas, the temperature of the gas mixture is varied prior to its contact with the membrane to vary the permeability of the one gas to thus vary the recovery rate within a range of recovery rates while maintaining a constant recovered gas purity. The number of permeators connected to the source and in use is changed to select another range of recovery rates when variation of the temperature of the gas mixture to a predetermined temperature within the range of 20 to 80°C is not sufficient to maintain a constant purity at the desired rate of recovery and usage of the permeated gas.

## DESCRIPTION OF THE DRAWINGS

Figure 1 is a schematic view showing apparatus for carrying out the process of the present invention.

Figure 2 is a chart showing rates of gas permeation using varying numbers of permeators at varying gas temperatures.

## DETAILED DESCRIPTION OF THE INVENTION

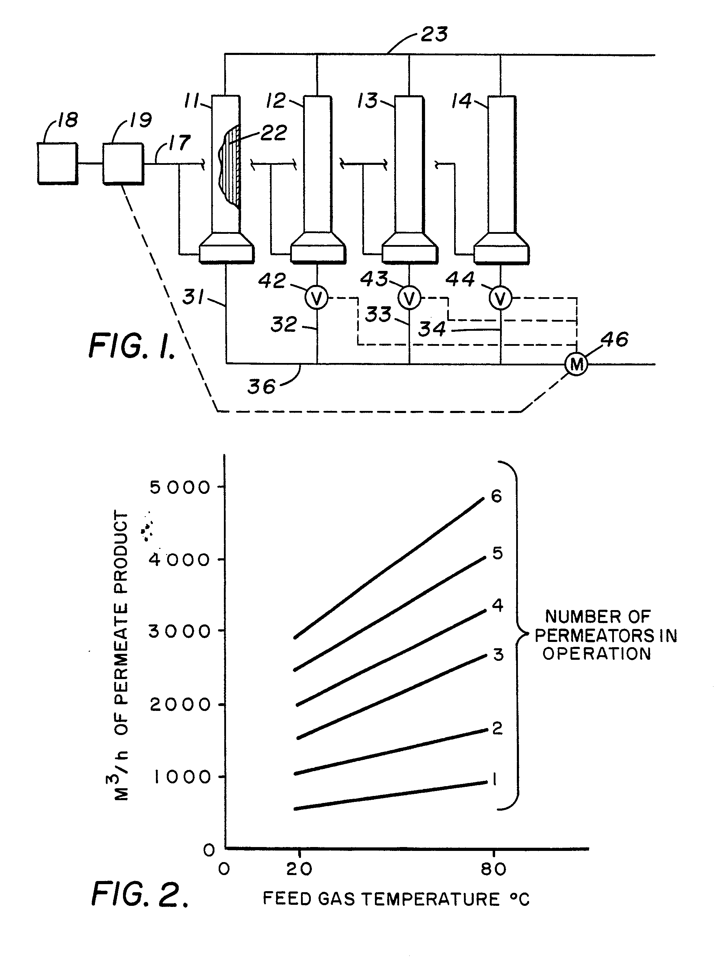

Referring now in detail to the drawing, there is shown in Figure 1 a plurality of permeators 11, 12, 13, and 14 connected in parallel through a line 17 to a source 18 of a mixture of gases containing one gas, such as hydrogen, which is to be recovered. Connected in the line 17 between the source 18 and the permeators 11-14 is a heat exchanger 19 of a known type which is provided for the purpose of varying the temperature of the gas mixture entering the permeators.

Each of the permeators 11-14 is provided with a permeable membrane which is preferably in the form of a bundle of hollow fibers 22 which are suitable for separating one gas from other gases of the mixture. Preferably, the hollow fibers used are fibers such as those disclosed in U. S. Patent No. 4,230,463. The permeators 11-14 are so constructed that the gas mixture is brought into contact with the exterior surfaces of the fibers 22 and the non-permeating gases are withdrawn from the permeators through a line 23. The gas which permeates the fibers 22 to the bores or interiors thereof is recovered from the permeators 11-14 through lines 31, 32, 33 and 34, respectively, which lead to a common discharge line 36 which carries away the recovered or permeated gas. This permeated gas may be used in a downstream process which requires the gas at a varying rate and a constant purity.

The lines 32, 33 and 34 are provided with valves 42, 43 and 44, respectively, which can be closed to prevent gas from the respective permeators from reaching the discharge line 36. These valves are connected to and controlled by a sensing and control device 46 of a well known type connected in the line 36 for sensing the rate of recovery of the permeated gas. The purpose of the sensing and control device 46 is to sense the rate of permeation or recovery of the permeated gas and to vary the rate of recovery of the permeated gas to maintain its purity at a constant value. The permeators 12, 13 and 14 are "connectable" to the source 18 in the sense that closing of the valves 42-44 has the same effect as disconnecting the permeators 12-14, respectively, from the source 18 while opening the valves 42-44 has the same effect as connecting the permeators 12-14 to the source 18.

The sensing device 46 is not only connected to actuate the valves 42-44 but is also connected to the heat exchanger 19 to control the operation of this heat exchanger to vary the temperature of the gas mixture being fed to the permeators in response to sensed variations in the permeated gas recovery rate. It will be readily seen from Figure 2 that varying the temperature of the gas mixture varies the rate of recovery of the more permeable gas within a fixed range of recovery rates, while changing the number of permeators connected to the source 18 selects a new range of recovery rates.

The manner of carrying out the process of the present invention can best be understood by reference to Figure 2. Figure 1 shows four permeators, while Figure 2 illustrates the use of six permeators. The straight lines in Figure 2 illustrate the amount of permeated gas recovered per hour, in standard cubic meters, using a specified number of permeators and at various temperatures. The number appearing at the right hand of each of the straight lines is the number of permeators which are used to achieve the range of recovery rates illustrated by that straight line. It should be understood that Figure 2 is included for purposes of illustration and that the positioning and slopes of the lines in Figure 2 are representative of a particular installation involving the recovery of a particular gas. In other illustrations where, for example, different gases and different membranes or membrane areas are involved, other families of lines would be appropriate.

0075431
36-6278

These other families of lines will have the general positioning and arrangement of the lines shown in Figure 2.

In operation, the first permeator 11 remains connected to the source 18 and the sensing device 46 senses the amount of permeated gas recovered through the line 36. If the amount of permeated gas desired is relatively small, the sensing device 46 maintains the valves 42-44 in a closed position and controls the heat exchanger 19 to vary the temperature of the gas passing through the line 17 to maintain the permeate gas passing through line 36 at a desired rate within a range of recovery rates. The lowermost line, indicated by reference numeral 1, in Figure 2 illustrates this operation.

If a higher rate of recovery of the permeated gas within a given range is desired, the temperature of the gas passing through the line 17 is increased by the heat exchange 19, under the control of the sensing device 46, until the recovery rate reaches the desired value. If the temperature of the gas is increased to about $80^{\circ}C$ and the rate of recovery is still below the desired value, then the sensing device 42 opens the valve 32 to connect the permeator 12 to the source 18 to thereby select another range of recovery rates, using both permeators 11 and 12. Operation at this stage is represented by line 2 in Figure 2. When the permeator 12 is connected to the source 18 it is probable that it will be necessary to operate the heat exchanger 19 to vary the temperature of the gas mixture entering the permeators 11 and 12 to a lower value.

The fibers 22 used in the permeators 11-14 are preferably multicomponent membranes in the form of hollow fibers made from a polysulfone polymer, as described in detail in U. S. Patent No. 4,230,463. Preferably, the fibers will have a separation factor of at least 10 for hydrogen over other gases of the mixture from the source 18 and a hydrogen permeability of at least about $1\times10^{-6}$ cubic centimeters of hydrogen per square centimeter of fiber surface at a pressure of 1 centimeter of mercury across the wall of the filament.

The permeators 11-14 may be constructed as shown in U. S. Patent No. 4,220,535 or other U. S. patents. In this construction, the membrane is in the form of a plurality of hollow fibers which are enclosed in a tubular shell such that the gas mixture can be admitted to the shell to come into contact with the outer surfaces of the fibers. The more permeable gas of the mixture will permeate the walls of the fibers to the interiors or bores thereof and be recovered from these bores.

In some cases the desired rate of recovery may be a constant rate. In this case the process can be used to take into account varying gas mixture flow characteristics, such as varying flow rates or pressures, to maintain the rate of recovery at the desired constant value. In the usual case, however, the desired recovery rate is a rate which varies from time to time as downstream demand varies. This variation in recovery rate is accomplished in the present invention by varying the temperature of the gas mixture passing through the permeators to vary the recovery rate within a range of recovery rates and by varying the number of permeators connected to the source to select a different range of recovery rates when varying the gas mixture temperatures to a value within the range of 20 to 80°C, preferably 40 to 70°C, is insufficient to maintain the desired recovery rate.

Of course, it is not necessary that the gas mixture temperature be varied to the end of the specified range prior to varying the number of permeators in use. In many cases it will be preferred to vary the number of permeators in use to select a different recovery range such that less heating of the gas mixture will be required to provide the desired recovery rate. In this case, the sensing device 46 can be set to vary the number of permeators when the gas mixture has been varied to some predetermined value within the range of 20 to 80°C without achieving the desired rate of recovery. For example, for energy conservation or other reasons, it may be desirable in some cases to avoid heating the gas mixture above a predetermined temperature within

0075431
36-6278

the range of 20-80°C. Assume, for example, that this predetermined temperature is 50°C. Then the sensing device 46 would be set to connect another permeator to the source 18 when the gas mixture reaches 50°C and a still higher recovery rate is desired. This would conserve energy by achieving the desired recovery rate without the necessity of heating the gas mixture above 50°C.

It should be noted that lesser variations in recovery rate are achieved by varying the temperature of the gas mixture, while greater variations in the recovery rate are achieved by changing the number of permeators connected to the source. Changing the number of permeators connected to the source 18 changes the range of rate of recovery while changing the temperature of the gas mixture varies the rate of recovery within a range to achieve the precise recovery rate desired.

When the gas temperature is increased to the upper limit of the range of -20 to 80°C and the rate of recovery is still insufficient, the sensing device 46 will, unless it has been set to some predetermined temperature below 80°C, then act to connect another permeator to the source 18. Conversely, if the temperature of the gas is adjusted downward to the lower end of the range of 20 to 80°C, preferably 40°C to 70°C, and the rate of recovery is still undesirably high, the sensing device 46 will act to disconnect one of the permeators from the source 18 by closing the valve associated therewith.

In most cases it will be necessary to vary the gas mixture temperature downward when an additional permeator is put into use and to vary the gas mixture temperature upward when the number of permeators in use is reduced, especially where only a small change is desired in the rate of recovery.

From Figure 2 it can readily be seen that the rate of recovery can be varied greatly when both the gas mixture temperature and the effective membrane are changed, the effective membrane area being changed when the number of permeators connected to the source 18 is changed. For example in the installation represented by the family of lines in Figure 2, the recovery rate can be varied from about 500 $m^3$/hr. to well above 5,000 $m^3$/hr., all at a substantially constant purity of the recovered gas.

The preferred use of this invention is in the separation of hydrogen from mixtures containing other gases which are less permeable than hydrogen. Some of the gases which have significantly slower permeating rates with a given membrane, compared to gases such as hydrogen and hydrogen sulfide, are methane and other hydrocarbon gases, nitrogen, carbon monoxide, etc.

WHAT IS CLAIMED IS:

1.  A process for separating one gas at a variable recovery rate and a constant purity from a mixture of gases flowing from a source comprising

   (a)  providing a plurality of permeators connectable to the source, each of said permeators having a membrane more permeable to said one gas than other gases of said mixture;

   (b)  bringing said gas mixture into contact with a feed side of the membrane of one of said permeators to allow said one gas to permeate from said feed side of said membrane to a recovery side of said membrane;

   (c)  recovering the permeated gas from said recovery side;

   (d)  varying the temperature of the gas mixture to a value within the range of 20 to 80°C prior to contact with the membrane to vary said recovery rate to a desired value within a range of recovery rates; and

   (e)  varying the number of permeators connected to the source to select another range of recovery rates when varying the gas temperature to a predetermined temperature within said range does not maintain said desired recovery rate.

2.  The process of claim 1 wherein the number of permeators connected to the source is increased when the recovery rate is below said desired recovery rate after the temperature of the gas mixture has been varied upward to about 70°C and the number of permeators connected to the source is decreaseed when the recovery rate is above said desired rate after the temperature of the gas mixture has been varied downward to about 40°C.

3.  The process of claim 1 wherein the temperature of said gas mixture is varied downward when the number of permeators connected to the source is increased, said temperature being varied upward when the number of permeators connected to the source is decreased.

4. The process of claim 3 wherein said rate of recovery is sensed and the gas mixture temperature and the number of permeators connected to said source are varied in response to sensed variations in said rate of recovery.

5. The process of claim 4 wherein varying the temperature of the gas mixture varies the rate of recovery within a range and varying the number of permeators connected to the source changes the range of rate of recovery.

6. The process of claim 5 wherein the membranes are in the form of hollow fibers.

7. The process of claim 6 wherein the temperature range is $40^{\circ}$ to $70^{\circ}$C.

8. The process of claim 7 wherein said one gas is hydrogen and said fibers have a separation factor of at least about 10 for hydrogen over said other gases.

9. The process of claim 8 wherein the fiber is made from a polysulfone polymer and has a hydrogen permeability of at least about $1 \times 10^{-6}$ cubic centimeters of hydrogen per square centimeter of fiber surface at a pressure of 1 centimeter of mercury across the wall of said fiber.

FIG. 1.

FIG. 2.

M³/h OF PERMEATE PRODUCT

FEED GAS TEMPERATURE °C

NUMBER OF PERMEATORS IN OPERATION

0075431
Application number

## European Patent Office

## EUROPEAN SEARCH REPORT

EP 82 30 4836.8

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A,P | EP - A1 - 0 043 231 (MONSANTO CO.)<br>* claim 1 ; page 5, lines 15 to 27 ;<br>page 10, lines 14 to 19 ; fig. 1 *<br>-- | 1,2,4,<br>6,7 | B 01 D 53/22 |
| A | US - A - 3 976 451 (R.H. BLACKMER et al.)<br>* claims 1, 2, 11, 17 ; column 3, lines 16 to 44 *<br>-- | 1 | |
| A | DE - A1- 2 910 661 (MONSANTO CO.)<br>* page 65, lines 11 to 18 ;<br>page 66, lines 7 to 11 *<br>    &   US - A - 4 180 552<br>    &   US - A - 4 180 388<br>---- | 8,9 | **TECHNICAL FIELDS SEARCHED (Int.Cl. 3)**<br><br>B 01 D 53/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| Berlin | 01-11-1982 | BERTRAM |

EPO Form 1503.1 06.78